Europäisches Patentamt

European Patent Office

Office européen des brevets

(11) Publication number: **0 520 578 A2**

# EUROPEAN PATENT APPLICATION

(21) Application number: **92201862.7**

(22) Date of filing: **22.06.92**

(51) Int. Cl.⁵: **E21B 7/06**, //F16L27/08

(30) Priority: **27.06.91 US 722073**

(43) Date of publication of application:
**30.12.92 Bulletin 92/53**

(84) Designated Contracting States:
**DE DK FR GB IT NL**

(71) Applicant: **Anadrill International SA**
**8 Calle Aquilino de la Guardia**
**Panama(PA)**

(84) **DE DK GB IT NL**

(71) Applicant: **SERVICES PETROLIERS**

**SCHLUMBERGER**
**42, rue Saint-Dominique**
**F-75007 Paris(FR)**

(84) **FR**

(72) Inventor: **Askew, Warren E.**
**4971 Yarwell**
**Houston, Texas 77096(US)**

(74) Representative: **Hyden, Martin Douglas**
**c/o Schlumberger Cambridge Research**
**Limited, High Cross, PO Box 153**
**Cambridge CB3 OHG(GB)**

(54) Surface adjustable bent housing.

(57) In accordance with an illustrative embodiment of the present invention, a surface adjustable bent housing for use in a downhole drilling motor assembly includes a lower housing that is coupled by a threaded connection to a mandrel that is pivotally mounted in an upper housing by a ball-type joint and a pair of radial keys. A stack of rings having inclined end faces is mounted on the mandrel between the opposed ends of the upper and lower housing members so that the relative orientation of the rings creates a bend angle in the assembly that is rigidly maintained when the threaded connection is tightened against the rings. Longitudinal splines are used to couple the rings to the mandrel, which are selectively released during adjustment. Compressive loads due to bending moment are carried on the outer annular surfaces of the rings to provide a relatively stiff joint.

FIG. 2A

## FIELD OF THE INVENTION

This invention relates generally to a bent housing that is used as a part of a downhole drilling motor assembly to control the inclination of a directionally drilled borehole, and particularly to a new and improved bent housing assembly that can be adjusted at the surface to provide a selected bend angle that influences the course or trajectory that the borehole will take while the motor is operated on bottom.

## BACKGROUND OF THE INVENTION

A bent housing has been used between the bit and the power section of a mud circulation-operated downhole drilling motor to cause a gradual change in the inclination of a borehole from vertical to some angle with respect thereto, or from an angle that already has been established to another angle. The bent housing typically has upper and lower housing members whose longitudinal axes cross one another at a bend point and at a low angle in the range of from $\frac{1}{4}°$ to $2°$. Of course the greater the bend angle, the shorter the radius of curvature of the newly drilled borehole. In order to drill straight ahead, the drill string and attached motor can be rotated so that the bend point orbits about the axis of the borehole.

It is desirable to provide a bent housing where the bend angle is adjustable so that one assembly can be used for the various course corrections that may be needed, rather than a rigid bent housing that requires a large inventory thereof for a particular well drilling program. Several bent housings that can be adjusted at the surface to a selected angle have been proposed. One system known to applicant manufactured by Deepco, Inc. of Pearland, Texas, uses a series of rings that are mounted on a mandrel that can pivot about a ball joint in an upper housing member. The rings have different upper and lower face angles so that rotation of at least one of the rings relative to the others provides different degrees of bend at a bend point that is defined by the ball joint. After adjustment, the rings are locked by radial pins, and a lock nut is threaded up against the lower ring to tighten the ring assembly. It has been found that this system, although employing a useful concept, is not as rugged and reliable as needed in view of the very high bending moments to which a bent housing can be subjected during drilling, particularly over the initial portion of a course correction. For example, the pins which are intended to hold the rings in place can shear off and result in an uncontrolled joint. Moreover, the rings have full top and bottom surface engagement which can result in separation of shoulder faces due to removal of compressive stress on one side of the shoulders under high bending loads, so that the rings can rotate as high torque loads are placed on the mandrel. Any time the rings can rotate in the hole the pins can shear off, and the selected bend angle cannot be maintained due to a wobbly joint. The lock nut also can get loose and provide a degree of bending freedom which is highly undesirable. Such loosening can occur as a result of cyclic bending and tension stresses that occur when the motor housing is rotated in a rotary mode for straight-ahead drilling. Since the motor housing is being rotated in a curved borehole, until the hole straightens out with further drilling, the housing goes from being bent backwards to being bent in the same angle as the hole once during each revolution of the drill string. This condition can cause the mandrel of the assembly to twist inside the rings, which puts severe shear stresses on the pins which hold the rings.

A general object of the present invention is to provide a new and improved surface adjustable bent housing assembly that obviates the problems and shortcomings of prior devices mentioned above.

## SUMMARY OF THE INVENTION

This and other objects are attained in accordance with the concepts of the present invention through the provision of a bent housing apparatus that includes an upper housing member having a mandrel arranged for tilting movement in a single plane therein, and a lower housing member that is connected to the lower end portion of such mandrel. The lower end of the upper housing member and the upper end of the lower housing member are spaced axially apart, and a plurality of stacked rings are mounted on the mandrel between such ends. Some of the rings have at least one of their upper and lower faces sloped at a low angle with respect to a plane which extends at a right angle through their longitudinal axes, so that rotation of one or more of the rings relative to others creates a bend angle between the longitudinal axes of the upper and lower housing members.

To lock each of the rings in a selected angular orientation, slidable spline couplings are formed on the inner periphery of each ring and at axially spaced locations on the outer periphery of the mandrel. The lengths of the respective spline couplings allows some but not all of the rings to be positioned for rotational adjustment by axial sliding movement thereof. After the rings have been rotated to selected orientations, the spline couplings are reengaged to prevent relative rotation. The use of spline couplings instead of radial pins or the like provides an extremely rugged and sturdy construction which will not permit any relative rotation of the rings during drilling. The end faces of the rings are shaped in such a way that bending loads to which the rings are subjected in use are concentrated at outer transverse areas thereof to provide a much stiffer resultant joint then has heretofore been used. In a preferred embodiment, a support ring is used at the lower end of the stack and carries means that biases the other rings upward to expedite the ring orientation procedure which is carried out at the surface to establish a selected bend angle in the housing assembly.

## BRIEF DESCRIPTION OF THE DRAWINGS

The present invention has other objects, features and advantages that will become more clearly apparent in connection with the following detailed description of a preferred embodiment, taken in conjunction with the appended drawings in which:

Figure 1 is a schematic view of a well being directionally drilled using a downhole motor having a bent housing;

Figures 2A and 2B are longitudinal cross-sectional views, with some portions in side elevation, of the bent housing assembly of the present invention;

Figure 3 is a fragmentary, enlarged sectional view of the bend angle adjusting ring assembly; and

Figures 4A-4C are schematic views of the rings in various angular relative positions.

## DETAILED DESCRIPTION OF A PREFERRED EMBODIMENT

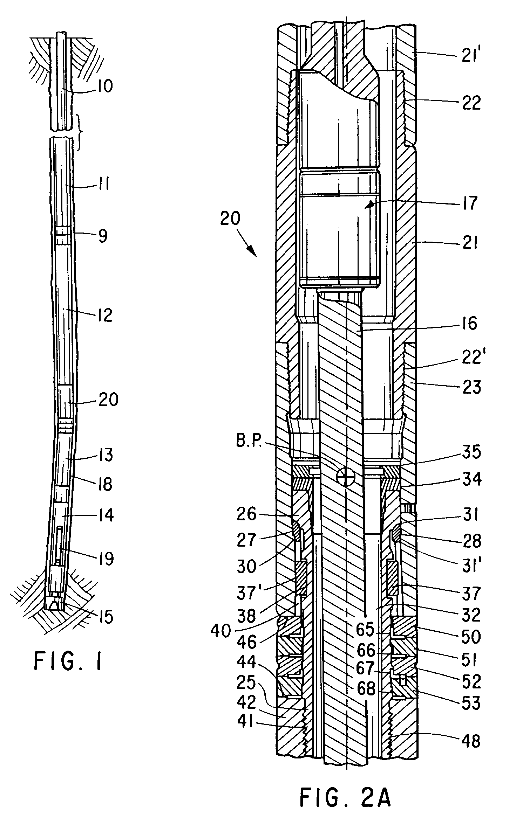

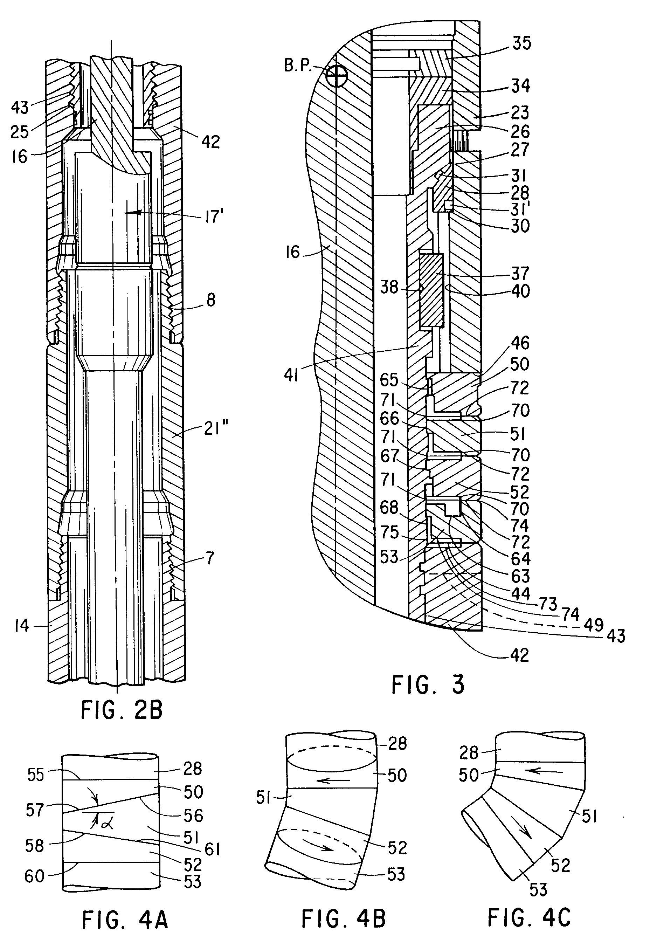

Referring initially to Figure 1, a drill string including a section of drill pipe 10 and a length of relatively heavy drill collars 11 are shown supporting a downhole motor power section 12, the bent housing assembly 20 of the present invention, a bearing section 14, and a drill bit 15. Drilling fluids circulated by mud pumps (not shown) at the surface down the drill pipe 10 and the collars 11 cause the rotor of the power section 12 to rotate, and such rotation is coupled to the bit 15 by a drive shaft 16 (Figure 2A and 2B) having cardan-type universal joints 17, 17' at its upper and lower ends. The drilling fluids that are exhausted from the power section 12 flow down through the assembly 20 and through nozzles or jets in the bit 15, and then circulate upward toward the surface through the annulus 18 between the drilling tool string and the wall of the borehole 19. A stabilizer 19 typically is mounted on the bearing assembly 14, and several other stabilizers (not shown) can be included in the drill string uphole at longitudinal spaced locations.

The bent housing assembly 20 is adjusted at the surface to provide a selected bend angle prior to running the drilling tool string into the well, so that the bit 15 will begin to drill along a different path to establish a different borehole inclination once mud circulation is started. Various course corrections can be made by setting the assembly 20 for different bend angles to assure that the bit 15 reaches its target. Of course the drill string 10, 11 can be rotated at the surface to cause straight-ahead drilling even though a bend angle is present, such rotation being superimposed over the rotation of the motor output shaft. A directional drilling procedure where the drill string 10, 11 is not being rotated can be referred to as the "sliding" mode, and where the drill string is being rotated as the "rotating" mode. It will be recognized that when a bend angle is present and the rotating drilling mode is being used, very high bending moments that cause correspondingly high tensile and compressive stresses will be imposed on the bent housing in a cyclical manner, that is, during each revolution.

As illustrated in Figure 2A, the bent housing assembly 20 includes an upper adapter sub 21 having threads 22 that connect the upper end of the sub to the lower end of the motor housing 21', and additional threads 22' that connect the lower end of the sub to the upper end of an upper bent housing member 23. A mandrel 25 that fits inside the housing member 23 has a ball head 26 at its upper end, the head having a spherical lower surface 27 that engages a seat ring 28 which is fixed within the housing 23 against a shoulder 30. Seal rings 31, 31' prevent fluid leakage past the ball head 26 as fluids are circulated downward through the bore 32 of the mandrel 25. To keep abrasive drilling fluids away from the ball head 26, protector rings 34 and 35 preferably are provided. The upper ring 35 can be made of a metal, and the lower ring 34 preferably is a resilient member that is bonded to lower surfaces of the ring 35 as shown.

In order to confine pivotal rotation of the mandrel 25 relative to the upper housing member 23 to a single longitudinally extending plane which for purposes of explanation can be considered as the plane of the drawing Figure 2A, a pair of oppositely extending keys 37, 37' are mounted in diametrically opposed slots 38 on the exterior of the mandrel 25 below the ball head 26. The keys 37 and 37' extend outward into elongated grooves 40 in the lower end portion of the housing member 23. The inner diameter of the right side of the lower portion of the upper housing member 23 is bored off-center and off-axis so that there is lateral clearance to allow the maximum bend angle to occur. Thus arranged, the mandrel 25 and the housing member 42 can tilt only to the right in the above-mentioned plane, as viewed from above. The mandrel 25 and the lower housing 42 cannot pivot forward or rearward of such plane since a close tolerance fit is provided between the sides of the keys 37, 37' and the side walls of the grooves 40.

The lower end portion 41 of the mandrel 25 is rigidly secured to the upper end portion of the lower housing member 42 by threads 43. Appropriate seals are used at this threaded connection 43, and at other such connections, to prevent fluid leakage to the outside. The upper end face 44 of the lower housing member 42 defines a transverse shoulder which opposes, and is axially spaced from, a lower face or shoulder 46 on the lower end of the upper housing member 23. The axial separation of the shoulders 44 and 46 provides space where a stack of ring members 50-53 are positioned.

The relative angular orientation of the upper three rings 50-52 establishes a selected bend angle at the point BP in the assembly 20. As shown schematically for purposes of explanation in an exaggerated form in Figures 4A-C, the upper ring 50 has an upper face 55 that extends at a right angle to the longitudinal axis of the upper housing member 23, and a lower face 56 that extends at an angle $\alpha$ relative to the upper face 55. The middle ring 51 has both its upper face 57 and its lower face 58 inclined at the same angle $\alpha$, but in opposite directions as shown. The lower ring 52 has a lower face 60 that also extends at a right angle to its longitudinal axis, and an upper face 61 that is inclined at the angle $\alpha$ like the upper face 57 of the middle ring 51. When the rings 50-52 are stacked one upon the other in the angular orientations shown in Figure 4A, the inclination angles of the various faces cancel one another so that the stack of rings stands essentially straight. On the other hand if the upper and lower rings 50 and 52 are rotated an equal amount in opposite directions through an angle from 0° to 180° from their initial orientation shown in Figure 4A, while the middle ring 51 is held stationary, the stack of rings becomes bent to produce a bend angle that is a multiple of the angle $\alpha$. For example, where the angle $\alpha$ is $\frac{1}{2}$°, if the upper and lower rings 50, 52 are rotated in opposite directions through an angle of 90°, then the resultant bend angle will be 1° and the ring assembly will have an overall configuration like that shown in Figure 4B. If the upper and lower rings 50, 52 then are rotated in the same opposite directions through another 90° for a total rotation or each of these rings from their initial orientation of 180°, then the stack of rings assumes a configuration like that shown in exaggerated form in Figure 4C to provide a bend angle of 2°, which is four times the angle $\alpha$. In this example, an angle of 2° is the maximum bend angle that can be produced, since additional rotations of the rings 50, 52 in the same opposite directions will result in a reduction of the angle that is established at the 180° position. For a typical directional drilling operation, the angle $\alpha$ can be, for example, the above-mentioned $\frac{1}{2}$° so that any bend angle up about 2° can be used, depending upon the trajectory that the drill bit 15 should take to achieve a desired change in the inclination of the borehole 9. The bend angles that result when the rings are in the relative orientation shown in Figures 4B and 4C cause tilting of the mandrel 25 and the lower housing member 42 to the right with respect to the upper housing member 23, as viewed from above. As noted above, such tilting movement is allowed by the lateral clearance between the outer face of the key 37 and the adjacent inner walls of the lower portion of the upper housing member 23. It will be apparent that the rings 50-52 can be relatively oriented such that most any bend angle in the above mentioned range can be achieved, for example in increments of about $\frac{1}{4}$°.

Referring now to Figure 3, a support ring 53, which is positioned at the lower end of the stack of rings 50-52, has a plurality of angularly spaced recesses 63 that receive coil springs 64 which bias the other rings 50-52 upward toward the shoulder 46 on the lower end of the upper housing member 23. The bias of the springs 64 allows the threaded connection 43 to be loosened somewhat for adjustment while the rings 50-52 are held in their upper positions by the springs. The resilience of the springs 64 allows the stack of rings 50-52 to be pulled downward by hand in order to rotate the upper and/or lower rings 50, 52, and when the stack is released the springs 64 will shift them back upward to their original positions. Each of the rings 50-52 and the support ring 53 has an individual, axially extending spline and groove coupling 65-68 to the exterior of the mandrel 25 which prevents any relative rotation when they are tightened together as a stack between the housing shoulders 44 and 46. The respective axial lengths of the various spline connections 65-68 are different so that during adjustment of the bend angle, the support ring 53 and the middle ring 51 cannot rotate, even though they are shifted down by the same amount as the upper and lower rings 50 and 52. However, such downward movement disengages the splines 65 and 67, so that the upper ring 50 and the lower ring 52 are free to be individually rotated relative to the middle ring 51 in order to obtain whatever bend angle is desired. In the example shown in Figure 4B, the upper ring 50 and the lower ring 52 have been rotated in opposite directions through an angle of 90° to establish a bend angle of 1°, and in the example shown in Figure 4C the rings have been rotated 90° in the same direction to establish a bend angle of 2°. Of course other total bend angles can be established by orienting the rings 50 and 52 at selected azimuthal positions relative to the middle ring 51, which remains co-rotatively coupled to the mandrel 25 by the splines 66, even though the stack of rings 50-52 is shifted downward over the distance between the shoulder 44 and the dash line 49 shown in Figure 3 as the connection 43 is partially unthreaded for adjustment.

Each of the rings 50-53 has an undercut lower shoulder 70 that is spaced axially from a companion undercut upper shoulder 71 on the adjacent ring to provide separation spaces 72 between the inner regions of the rings. A corresponding space 73 is provided by the lower inner surface 74 of the support ring 53 and inner portion 75 of the shoulder 44 of the lower housing member 42. The presence of the spaces 73, 72 substantially reduces the overall area of contact between the rings 50-53, and in effect moves all axially engaged surfaces to the outer annular regions of the rings. This construction provides significantly improved bending resistance and a stiffer overall assembly by reason of the compressive loading being further out from the axial centerline of the tool. Thus the stack of rings 50-53 is much less likely to be loosened in the borehole than can otherwise occur in a design where the shoulder surfaces extend all the way in to the inner diameters of the rings. Moreover the use of a nut, which can be fairly easily loosened in the borehole, is eliminated.

**OPERATION**

In operation, the bent housing assembly 20 of the present invention is assembled as shown in the drawings with the upper adapter sub 21 threaded at 22 to the lower end of the housing 21' of the power section 12 of the motor, and the lower adapter sub 21'' threaded at 7 as shown in Figure 2B to the upper end of the bearing housing 14. To adjust the assembly 20 to provide a selected bend angle, the lower housing 42 is partially unthreaded along the mandrel threads 43 to approximately the level of the dash line 49 shown in Figure 3, which can be an exemplary back-off distance of about 5/8" inch. During such unthreading, the coil springs 64 will extend to maintain the stack of rings 50-52 in their upper positions where the upper ring 50 is against the lower shoulder 46 of the upper housing member 23. A vertical scribe mark (not shown) is placed near the lower end of the upper housing member 23 in radial alignment with the key 37 so that the operator knows the plane in which the bend angle is adjustable, as well as the lateral direction in which such adjustment can be made. Assuming that the rings 50-53 initially are stacked straight as shown in Figures 4A, to set the bend angle at 1°, for example, the service technician grasps the upper ring 50 and the lower ring 52 and pulls all three rings downward. The splines 65 between the upper ring 50 and the mandrel 25 and the splines 67 between the ring 52 and the mandrel will disengage, due to their relatively short lengths; however the splines 66 between the middle ring 51 and the mandrel 25 will remain engaged due to their longer length. Then the upper ring 50 is rotated in one hand direction by 90°, for example clockwise as indicated by the upper arrow in Figure 4B, and the lower ring 52 is rotated through the same angle, but in the opposite hand direction, or counterclockwise as indicated by the lower arrow in Figure 4B. Suitable indicia (not shown) in the way of alignment marks for various degrees of bend can be stamped on the outer walls of the rings 50-52 as an aid to proper positioning. Provided the angle $\alpha$ is $\frac{1}{2}$°, then such relative rotation will produce a bend angle in the assembly 20 at the point "BP" in Figures 2A and 3 of 1°. After rotating the rings 50 and 52 by 90° in opposite hand directions in the above example, the stack of rings 50-52 is released and the coil springs 64 extend to lift the rings to their upper positions where the splines 65 and 67 are reengaged. Then the threaded connection 43 is made up tight so that the shoulder 44 on the lower housing member 42 is up against the companion surface on the support ring 53, as are the corresponding surfaces on the rings 52, 51, 50 and the upper housing 23.

To set the bend angle at 2°, the rings 50, 52 are rotated in the same opposite hand directions by another 90°, for a total of 180°, to bring their respective tallest walls into longitudinal alignment with the tallest wall of the ring 51. The resultant bend angle will be four times the ring face inclination angle $\alpha$. This relative position of parts is shown, for example, in Figure 4C. Hereagain the threaded connection 43 is tightened to engage the outer annular surfaces of the respective rings and the end faces of the housings 28 and 42. Referring to Figure 2A, the presence of the keys 37, 37' on the mandrel 25 which are engaged in the longitudinal grooves 40 in the upper housing 23 dictate that the mandrel and the lower housing member 42 can pivot about the geometric center "BP" of the spherical surface 27 on the ball head 26 only in a longitudinal plane that passes through the longitudinal centerlines of the keys 37, 37' and contains the point "BP". The use of axial splines to couple the ring member 50-53 to the mandrel 25 provides an extremely rugged and sturdy construction that will not allow the ring stack to be loosened during drilling. This is of extreme importance because if any one or more of the rings 50-52 can rotate under any circumstances relative the mandrel 25, then the stack will loosen and provide a wobbly, uncontrolled joint. The construction whereby all compressive loads due to bending moments are carried on the outer annular regions of the respective rings, as well as the outer region of the lower housing face 44, provides a very stiff joint compared to a construction where there is full surface engagement. This is because where full surface engagement and shear pins are employed, high bending moments can produce stress patterns that allow ring rotation and pin shearing. The use of the support ring 53 and the coil springs 64 simplifies the adjustment procedure since all the rings 50-52 do not shift down and the splines 65 and 67 uncouple as the threaded connection 43 is partially released. Thus there is no opportunity for a ring to be inadvertently rotated prior to the time that a selected ring adjustment is to be made. The engagement of the upper end of the lower housing member 42 with the support ring 53, as opposed to use of a separate nut that is mounted on the threads 43, again provides a rigid and sturdy construction that will not loosen in the borehole during drilling.

It will be apparent that the inclination angle α of the faces of the rings 50-52 can he more or less than ½°, which will produce overall bend angles in the assembly 20 that are different from those mentioned herein. Thus the bend angles in a range of up of 2° are only exemplary, and are not to be considered as limitative in any sense.

It now will be recognized that a new and improved surface adjustable bent housing assembly has been disclosed. Since certain changes or modifications may be made in the disclosed embodiment without departing from the inventive concepts involved, it is the aim of the following claims to cover all such changes and modifications that fall within the true spirit and scope of the present invention.

**Claims**

1. A bent housing apparatus adapted to be incorporated in a downhole drilling motor to provide a selected bend angle, including a first tubular housing member having a mandrel pivotally mounted therein, a second tubular housing member releasably connected to said mandrel and having an end face longitudinally spaced from an opposed end face on said first housing member, a plurality of ring members surrounding said mandrel between said end faces, each of said ring members having at least one of its end surfaces inclined with respect to the longitudinal axis of said mandrel so that said ring members can be rotationally oriented with respect to one another to provide a selected bend angle, characterized by relatively slidable means for individually coupling each of said ring members to said mandrel.

2. The bent housing apparatus of claim 1 further characterized in that each of said relatively slidable means includes axially spaced spline and groove means on the outer periphery of said mandrel and the respective inner peripheries of said ring members.

3. The bent housing apparatus of claim 2 further characterized in that some of said spline and groove means have different axial lengths than others so that longitudinal movement of said ring members relatively along said mandrel disengages said some spline and groove means but not said others.

4. The bent housing apparatus of claim 3 further characterized by threaded means for releasably connecting said second tubular housing member to said mandrel, partial unthreading of said threaded means increasing the axial separation of said end faces and enabling longitudinal movement of some of said ring members relative to said mandrel.

5. The bend housing apparatus of claim 4 further characterized by resilient means for biasing said some ring members toward said end face on said first housing member.

6. The bent housing apparatus of claim 5 characterized in that said some ring members include an upper, a lower, and an intermediate ring member, said spline and groove means having relative axial lengths such that the spline and groove means coupling said intermediate ring member to said mandrel remain engaged during said longitudinal movement and the spline and groove means coupling said upper and lower ring members become disengaged to enable selected angular orientation thereof with respect to said intermediate ring member.

7. The bent housing apparatus of claim 6 further characterized by a fourth ring member mounted on said mandrel below said lower ring member, said resilient means reacting between said fourth ring member and said lower ring member to yieldably bias said lower, intermediate, and upper ring members upward during angular adjustment thereof.

8. The bent housing apparatus of claim 1 further characterized by said end surfaces of said ring members have inner and outer regions, said inner regions being axially spaced so that bending loads are carried only by said outer regions.

9. The bent housing apparatus of claim 1 further characterized in that each of said end surfaces on said plurality of members is inclined with respect to a plane that is transverse to the longitudinal axis of said mandrel at an angle of about $\frac{1}{2}°$ so that said bend angle can be incrementally adjusted over a range up to about 2°.

FIG. I

FIG. 2A

FIG. 2B

FIG. 3

FIG. 4A

FIG. 4B

FIG. 4C